# EUROPEAN PATENT SPECIFICATION

(11) **EP 3 182 035 B1**
(45) Date of publication and mention of the grant of the patent: **11.02.2026**
(21) Application number: 16464012.0
(22) Date of filing: 12.12.2016
(51) Int. Cl.: F25B 9/00, F24F 3/044, F24F 5/00, B64D 13/02, B64D 13/08, F25B 9/06, B64D 13/06

(54) **COMPRESSED AIR COOLING EQUIPMENT AND DEVICE**
DRUCKLUFTKÜHLUNGAUSRÜSTUNG UND -VORRICHTUNG
ÉQUIPEMENT ET DISPOSITIF DE REFROIDISSEMENT D'AIR COMPRIMÉ

(30) Priority: 17.12.2015 RO 1016
(43) Date of publication of application: 21.06.2017
(73) Proprietor: Institutul National de Cercetare- Dezvoltare si Incercari pentru Electrotehnica - ICMET Craiova, 200764 Craiova (RO)
(72) Inventor: Teisanu, Florin, 200457 Craiova (RO); Chelan, Constantin, 200618 Craiova (RO); Duta, Marian, 200080 Craiova (RO); Patru, Ion, 200438 Craiova (RO)
(74) Representative: Strenc, Alexandru Cristian

(56) References cited:
- CN-U- 204 478 315
- DE-A1- 3 314 854
- DE-A1- 4 005 698
- DE-T2- 69 605 100
- GB-A- 2 237 373
- RO-B1- 122 506
- RO-B1- 95 442
- US-A- 4 430 867
- US-A- 5 121 610
- US-A- 5 461 882
- US-A1- 2005 126 204

## Description

This invention relates to a dedicated cooling equipment to ensure thermal and physiological comfort inside rooms (enclosures) such as: living space, work space, technological space, the vehicle's passenger compartment.

The equipment with halogenated refrigerants (chlorofluorocarbon products) is used for cooling enclosures, and consists in: engine, refrigerating compressor, condenser, drain valve, vaporizer etc. This equipment has good cooling efficiency, however, since it uses chlorofluorocarbon products, it is causing serious problems for the environment.

Compressed air cooling equipment is used as well for the background of the invention. Its operation is based on a vortex energy separation effect, known as the Rangue-Hilsch effect. The drawback of such equipment is that it simultaneously generates both cold air and hot air, and only one of the fractions is generally used in applications, while the other fraction is dissipated into the atmosphere.

There are equally known relevant technical solutions from the patent literature.

The patent document DE 3314854A1/1984 presents a method and equipment for the production of cooled conditioning air for the driver's cab of a mine locomotive. The method consists in compressing the air, cooling it through a heat exchanger with forced free air intake, a final cooling by expansion in a de Laval nozzle and delivering the air to the driver's cab of the locomotive. This solution could present a number of disadvantages, among which could be listed:
- cold air is not finally cleaned, but the intake air entering the cabin is contaminated with traces of oil and soot resulting from the carbonization of the oil in the turbo-compressor or the cylinder of the Diesel engine
- expansion of the compressed air in a single Laval convergent-divergent type linear hole creates a violent noise, difficult to attenuate
- manually operated distributor does not allow the automation of the operating cycles
- the equipment does not include a component for the automatic operation control, such as a programmable controller or a microprocessor

In its turn, the solution in the patent document KR 20030065020A/2003 presents a device with Freon compounds and compressed air for cooling to ultra low temperatures. It is configured with known elements ingeniously interconnected to obtain cryogenic air at -40 ÷ -60°C, after the moisture has been completely removed from it. The structure of the device consists of two main circuits, namely:
- a closed-type circuit through which a refrigerant (Freon compounds) flows, absorbing heat through an evaporator and dissipating heat through a condenser;
- an open circuit in which compressed air enters from a compressor, passes through a filter unit consisting of two successive filters for retaining particles in a secondary cooling unit , then finally cooled to cryogenic temperatures in a vortex tube.

In fact, in the vortex tube known in the background of the invention, a previously cooled compressed air flow enters and two air flows exit simultaneously, one of which is very cold (cryogenic air) and one is hot.

The presented solution also brings drawbacks due to the fact that:
- along with cryogenic air, it also generates hot air through the vortex tube , which is usually not used and is dumped into the environment
- it is a complex construction which, in addition to air also uses Freon compounds as working agents, which are pollutants for the environment
- it is not suitable for air conditioning in work and living spaces because it provides only air intake and creates excess pressure which cannot be tolerated by human staff
- considering the ultra cold air generated, as well as the fact that the humidity in it is almost completely removed, it is not physiologically recommended for breathing
- there are no components for automation of operation

The patent document US 3208229/1965 refers to the construction of the vortex tubes, which by expansion in the vortex field and energy separation simultaneously generate a flow of cold air and a flow of hot air. The vortex tube consists, among others, of a unit provided with a hole with connection for the intake of compressed air, another hole connected to a thermal tube and a valve lamination through which the hot air comes out, a third hole through which the cold air comes out, a vortex chamber, created in the said unit and the multi-jet turbulence nozzle 4a, a sealing gasket fastened with a cover.

This solution with no moving parts has the disadvantage of not turning the entire flow of inlet compressed air to cold air, but simultaneously generating during operation a flow of cold air and a flow of hot air, the hot air being purged and lost to the environment in the processes of air conditioning through cooling.

The problem solved by this invention is the processing of the entire quantity of compressed air, by a pneumatic device, resulting cold air at a temperature below ambient and its use in air conditioning through cooling inside a room/enclosure.

The operation of the invention is based on the thermodynamic process of compressed air expansion in a centrifugal field and turning it into cold air, harmless for human beings and for the environment.

The equipment according to the invention eliminates the disadvantages mentioned in that it provides a compressed air cooling equipment according to claim 1.

The equipment intended for cooling of a room (enclosure) according to the proposed technical solution has the following advantages:
it turns all compressed air into cold air;
it provides recirculation of the air in the passenger compartment or inlet of fresh-air and removal of stale air;
it promotes green technology for the environment, personal health and life;

Below is an example for the achievement of:
Fig. 1 Compressed air cooling equipment
Fig. 2a Pneumatic cooling device
Fig. 2b Multi-jet injector with axial swirl chamber
Fig. 2c Multi-jet injector with frontal swirl chamber

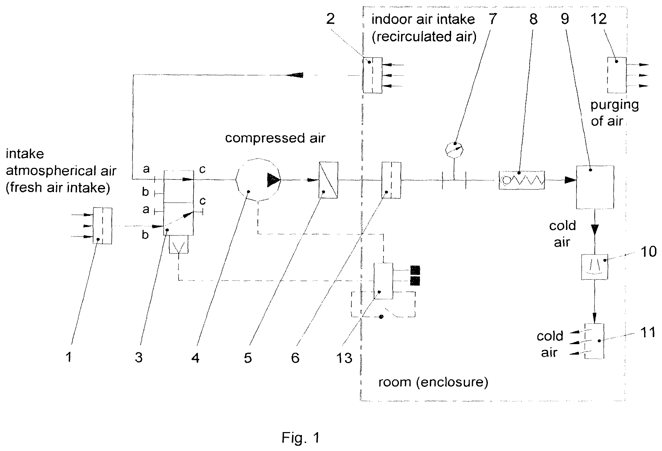

According to an embodiment of the invention, the equipment, schematized in Figure 1 , is comprised of an air filter (1) for cleaning inlet free air, another air filter (2) for cleaning the air sucked from the room, three-way and two-step distributor (3) for switching between indoor air and free air inlet circuit, a turbo-blower or electric air compressor type of source of compressed air (4) for generating low-pressure 2.5÷4 bar air, whose cyclic operation is controlled by a microprocessor command module (13), an air-to-air type heat exchanger (5) for removal of heat resulting from air compression, a microfilter (6) for cleaning vitiated air resulting from the compression process, a pressure gauge (7) for viewing circuit pressure value, a pressure relief valve (8) which opens when the pressure in the circuit reaches a preset value in the range 2.5÷4 bar, a pneumatic cooling device (9) built with no moving parts where sudden drop in compressed air pressure and an implicit decrease in temperature is caused by the expansion in centrifugal field; a silencer (10) for noise reduction caused by the sudden drop in pressure in the circuit; an air disperser (11) for dispersing cold air in the room; a relief valve (12) which opens automatically and performs purging in the atmosphere only when the pressure in the room reaches a preset threshold value from safety and physiological comfort conditions, a microprocessor command module (13).

The operation of the compressed air source (4) in automatic cycles depending on room temperature and time, as well as the position of the distributor (3) is provided by a known microprocessor command module (13).

Position a-c/open; b/closed, of the distributor (3) allows the installation to process the air inside the room (recirculated air) through cooling, and the position a/closed; b-c/open allows free air (fresh air) processing through cooling.

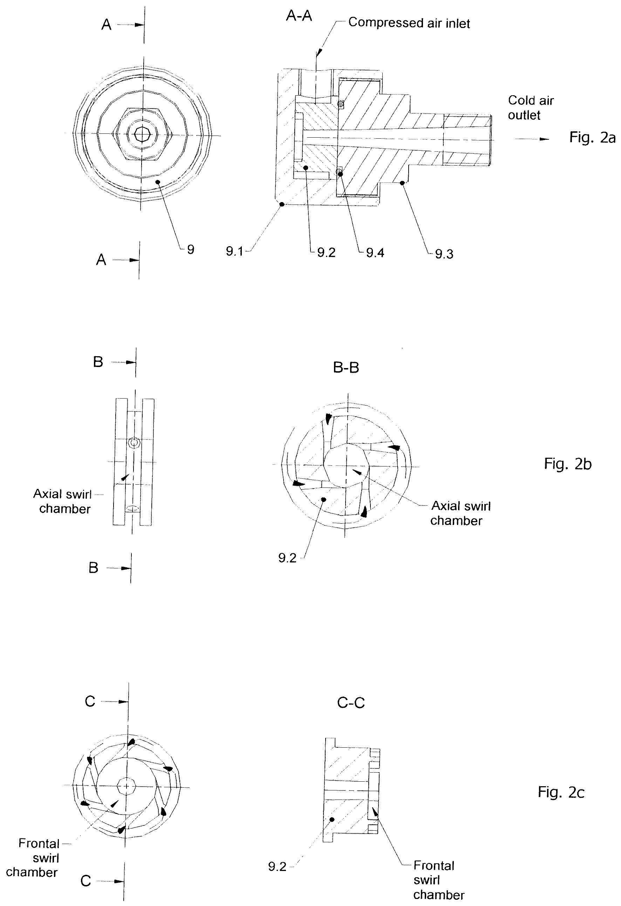

The pneumatic cooling device (9), as it is represented in fig. 2a, fig. 2b, fig. 2c , for expansion and centrifuging of compressed air (swirling) is built with no moving parts, respectively a multi-jet injector (9.2), located inside of a device unit (9.1)and pressed on the front surface by a sealing gasket(9.4) over which a cap (9.3) is threated . The multi-jet type injector (9.2), shown in fig. 2b or fig. 2c is fitted with a number of nozzle type holes arranged tangentially to the swirl chamber diameter, in order to divide the incident flow of compressed air, to atomize it and turn it into spray and also reduce the noise resulting from the centrifugal expansionby mutual annihilation of the noises corresponding to each jet

The design of the multi-jet injector (9.2) can be achieved with axial swirl chamber as in fig. 2b , or with frontal swirl chamber as in fig. 2c .

### Bibliography

1. Patent RO 122506 B1/2009
2. Patent RO 95442/1988
3. Vsevolod Radcenco - Vortex generators for cold and heat. Tehnica Publishing House, Bucharest, 1990 .

## Claims

1. Compressed air cooling equipment intended to ensure thermal and physiological comfort inside living spaces, work spaces, technological spaces, or vehicle's passenger compartment,
the cooling equipment comprises:
- a pneumatic circuit;
- an air filter (1) for cleaning inlet fresh air,
- an air filter (2) for cleaning the air sucked from the space or compartment ,
- three-way and two-step distributor (3) arranged in the pneumatic circuit for switching between indoor air and inlet fresh air;
- an air-to-air type heat exchanger (5) for removal of heat resulting from air compression, arranged in the pneumatic circuit after the compressor;
- a micro filter (6) for cleaning air resulting from the compression process, where the micro filter is arranged in the pneumatic circuit after the heat exchanger;
- a pressure gauge (7) arranged in the pneumatic circuit;
- a pressure relief valve (8) which opens when the pressure in the circuit reaches a preset value in the range 2.5÷4 bar, the pressure relief valve being arranged in the pneumatic circuit after the micro filter (6);
- a pneumatic cooling device (9) for generating cold air by air expansion in a centrifugal field, the pneumatic cooling device pneumatic cooling device being arranged after the pressure relief valve;
- a silencer (10) arranged in the pneumatic circuit after the pneumatic cooling device (9);
- an air disperser (11) for dispersing the cold air into the space or compartment;
- a microprocessor command module (13) ;
wherein the pneumatic cooling device (9) is built with no moving parts and comprises a multi-jet injector (9.2), a cap (9.3) and a gasket (9.4) wherein the multi-jet type injector (9.2) comprises an axial swirl chamber or frontal swirl chamber and has a number of nozzle type holes arranged tangentially to the swirl chamber circumference.

## Patentansprüche

1. Druckluftkühlausrüstung, die dazu bestimmt sind, thermischen und physiologischen Komfort in Wohnräumen, Arbeitsbereichen, Technologieräumen oder Fahrzeugfahrgasträumen zu gewährleisten, die Kühlausrüstung umfasst:
- ein pneumatischer Kreislauf;
- ein Luftfilter (1) zur Reinigung der Frischluftzufuhr;
- ein Luftfilter (2) zur Reinigung der aus dem Raum oder Abteil abgesaugten Luft;
- ein Dreiwege- und Zweistufenverteiler (3) im pneumatischen Kreislauf angeordnet zum Umschalten zwischen Raumluft und Frischluftzufuhr;
- ein Luft-Luft-Wärmetauscher (5) zur Abfuhr der durch die Luftkompression entstehenden Wärme, der im pneumatischen Kreislauf nach dem Kompressor angerordnet ist;
- ein Mikrofilter (6) zur Reinigung der beim Kompressionsprozess entstehenden Luft, wobei der Mikrofilter im pneumatischen Kreislauf nach dem Wärmetauscher angeordnet ist;
- ein im pneumatischen Kreislauf angeordnetes Manometer (7); - ein Druckbegrenzungsventil (8), das sich öffnet, wenn der Druck im Kreislauf einen voreingestellten Wert im Bereich von 2,5 + 4 bar erreicht; das Druckbegrenzungsventil ist im pneumatischen Kreislauf nach dem Mikrofilter (6) angeordnet;
- eine pneumatische Kühlvorrichtung (9) zur Erzeugung von Kaltluft durch Luftausdehnung im Zentrifugalfeld;
die pneumatische Kühlvorrichtung, die nach dem Druckbegrenzungsventil angeordnet ist;
- ein Schalldämpfer (10), der im pneumatischen Kreislauf nach der pneumatischen Kühlvorrichtung (9) angeordnet ist;
- ein Luftverteiler (11) zur Verteilung der kalten Luft in den Raum oder das Abteil;
- ein Mikroprozessor-Steuermodul (13);
wobei die pneumatische Kühlvorrichtung (9) ist ohne bewegliche Teile konstruiert und umfasst einen Mehstrahl-Injektor (9.2), eine Kappe (9.3) und eine Dichtung (9.4). wobei der Mehrstrahl-Injektor (9.2) weist eine axiale oder frontale Wirbelkammer auf und besitzt eine Anzahl von Düsenöffnungen, die tangential zum Umfang der Wirbelkammer angeordnet sind.

## Revendications

1. Équipement de refroidissement d'air comprimé destinés à assurer le confort thermique et physiologique dans les espaces de vie, les espaces de travail, les espaces technologiques ou l'habitacle d'un véhicule, l'équipement de refroidissement comprennent :
- un circuit pneumatique ;
- un filtre à air (1) pour nettoyer l'air frais entrant ;
- un filtre à air (2) pour le nettoyer l'air aspiré de l'espace ou du compartiment ;
- un distributeur à trois voies et deux étages (3) intégré au circuit pneumatique pour la commutation entre l'air intérieur et l'air frais entrant ;
- un échangeur de chaleur air-air (5) pour l'évacuation de la chaleur de l'air comprimé est acheminé dans le circuit pneumatique après le compresseur.
- un microfiltre (6) pour purifier l'air résultant du processus de compression est placé dans le circuit pneumatique après l'échangeur de chaleur.
- un manomètre (7) placé dans le circuit pneumatique.
- une soupape de décharge (8) qui s'ouvre lorsque la pression dans le circuit atteint une valeur prédéfinie comprise entre 2,5 et 4 bar, la soupape de décharge de pression étant disposée dans le circuit pneumatique après le microfiltre (6) ;
- un dispositif de refroidissement pneumatique (9) pour générer de l'air froid par détente centrifuge, ce dispositif étant disposé après la soupape de décharge de pression ;
- un silencieux (10) disposé dans le circuit pneumatique après le dispositif de refroidissement pneumatique (9) ;
- un diffuseur d'air (11) pour diffuser l'air froid dans l'espace ou le compartiment ;
- un module de commande à microprocesseur (13) ;
dans lequel le dispositif de refroidissement pneumatique (9) est conçu sans pièces mobiles et comprend un injecteur multijets (9.2), un bouchon (9.3) et un joint (9.4), dans lequel l'injecteur multijets (9.2) comprend une chambre de turbulence axiale ou frontale et comporte plusieurs orifices de type buse disposés tangentiellement à la circonférence de la chambre de turbulence.
